# EUROPÄISCHE PATENTSCHRIFT

(11) **EP 1 506 348 B1**
(45) Veröffentlichungstag und Bekanntmachung des Hinweises auf die Patenterteilung: **10.07.2019**
(21) Anmeldenummer: 03749841.7
(22) Anmeldetag: 09.05.2003
(51) Int. Cl.: F02D 41/18, F02D 41/10, F02D 41/38, F02D 41/14, F02D 41/40

(54) **VERFAHREN UND VORRICHTUNG ZUR STEUERUNG DER EINZUSPRITZENDEN KRAFTSTOFFMENGE EINER SELBSTZÜNDENDEN BRENNKRAFTMASCHINE**
METHOD AND DEVICE FOR CONTROLLING THE QUANTITY OF FUEL TO BE INJECTED INTO A SELF-IGNITING INTERNAL COMBUSTION ENGINE
PROCEDE ET DISPOSITIF PERMETTANT DE COMMANDER LA QUANTITE DE CARBURANT A INJECTER DANS UN MOTEUR A COMBUSTION INTERNE A ALLUMAGE AUTOMATIQUE

(30) Priorität: 14.05.2002 DE 10221377; 09.04.2003 DE 10316186
(43) Veröffentlichungstag der Anmeldung: 16.02.2005
(73) Patentinhaber: ROBERT BOSCH GMBH, 70442 Stuttgart (DE)
(72) Erfinder: BLEILE, Thomas, 70435 Stuttgart (DE); MICHALSKE, Andreas, 71229 Leonberg (DE); KRAUS, Benedikt, 70806 Kornwestheim (DE); RUPP, Andreas, 71672 Marbach (DE); KNITZ, Ralf, 74321 Bietigheim-Bissingen (DE); MADER, Christian, 70329 Stuttgart (DE)
(86) Internationale Anmeldenummer: PCT/DE2003/001487
(87) Internationale Veröffentlichungsnummer: WO 2003/095819

(56) Entgegenhaltungen:
- EP-A- 1 057 993
- EP-A- 1 164 274
- DE-A- 3 925 877
- DE-C- 19 637 395
- US-A- 4 423 713
- US-A1- 2002 100 466

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Aus der DE 39 25 877 A1 ist ein Verfahren und eine Vorrichtung zur Steuerung einer Brennkraftmaschine, insbesondere einer selbstzündenden Brennkraftmaschine, bekannt, bei der ausgehend von Betriebskenngrößen ein Begrenzungswert vorgegeben wird, auf den eine Größe, die die einzuspritzende Kraftstoffmenge charakterisiert, begrenzt wird. Dieser Begrenzungswert wird im auch als höchstzulässige Kraftstoffmenge bezeichnet. Der Begrenzungswert wird abhängig von der der Brennkraftmaschine zugeführten Frischluftmasse derart bestimmt, dass keine unzulässigen Rauchemissionen auftreten. Die einzuspritzende Kraftstoffmenge wird dann so gewählt, dass abhängig vom Betriebszustand diese höchstzulässige Kraftstoffmenge nicht überschritten wird. Dadurch können insbesondere beim Volllastbeschleunigen starke, sichtbare Rußentwicklungen vermieden werden.

Bei Beschleunigung im instationären Volllastbereich erfährt der Ladedruck eine starke zeitliche Änderung, wodurch aufgrund des Speichereffektes im Ansaugtrakt das Signal des Luftmassenmessers im Ansaugtrakt nicht mehr der dem Motor zugeführten Luftmasse entspricht. Eine Begrenzung der einzuspritzenden Kraftstoffmenge, ausgehend von dem Luftmassensignal eines entsprechenden Sensors, weist somit bei Ladedruckänderungen einen systematischen Fehler auf. Dies hat zur Folge, dass entweder in manchen Beschleunigungszuständen eine entsprechende Rußemission auftritt oder dass es zu Dynamikeinbußen kommt, aufgrund derer entsprechende Beschleunigungen nicht mehr möglich sind. Neben diesem systematischen Fehler führen Streuungen im Einspritzsystem und im Bereich der Messung der Luftmasse zu ungewollten Emissionen bzw. zu Leistungseinbußen.

Erfindungsgemäß ist es deshalb vorgesehen, dass die höchstzulässige Kraftstoffmenge ausgehend von einem Ausgangssignal eines physikalischen Modells eines Luftsystems vorgegeben wird, das als Eingangsgröße wenigstens eine Größe verarbeitet, die die Luftmenge charakterisiert, die der Brennkraftmaschine zugeführt wird. Dieses physikalische Modell eines Luftsystems modelliert verschiedene Größen, die das Luftsystem charakterisieren, wie beispielsweise die Sauerstoffkonzentration oder die Sauerstoffmenge in der Luft, die der Brennkraftmaschine zugeführt wird. Das physikalische Modell bildet Speichereffekte im Ansaugvolumen nach, Bei einer Ausgestaltung können hierbei noch weitere Größen, wie beispielsweise der eingespritzten Kraftstoffmenge, der Drehzahl, dem Ladedruck und/oder der Ladelufttemperatur, berücksichtigt werden.

Diese Vorgehensweise bietet den Vorteil, dass die bei großen Ladedruckgradienten auftretenden systematischen Abweichungen zwischen dem Ausgangssignal des Luftmassenmessers und der tatsächlichen Frischluftmasse verringert wird. Dadurch kann die bei Volllast maximal zulässige Einspritzmenge genauer bestimmt werden, wodurch spitzen werden.

Durch die Verwendung einer Lambda-Sonde, die ein Ist-Signal bezüglich der Sauerstoffkonzentration im Abgas liefert, können darüber hinaus die Auswirkungen von Systemstreuungen stark verringert werden. Erfindungsgemäß werden bei Verwendung des Modells und des Lambda-Signals die Vorteile des Lambda-Signals und die Vorteile des Modells kombiniert. Die Lambda-Sonde besitzt eine hohe statische Genauigkeit und eine geringe dynamische Genauigkeit. Das Modell besitzt eine hohe dynamische, aber eine geringe statische Genauigkeit. Durch die Kombination des Modells mit der LambdaSonde können eine hohe statische und eine hohe dynamische Genauigkeit erzielt werden.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines

Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

### Zeichnung

Die Erfindung wird nachstehend anhand der in der Zeichnung dargestellten Ausführungsformen erläutert. Figur 1 zeigt ein Blockdiagramm der erfindungsgemäßen Vorrichtung, die Figur 2 ein einfaches modellbasiertes System, Figur 3 ein einfaches Modell mit einer Lambda-Sonde kombiniert und die Figuren 4 und 5 weitere Ausgestaltungen.

Im folgenden wird die erfindungsgemäße Vorgehensweise am Beispiel der einzuspritzenden Kraftstoffmenge beschrieben. Anstelle der Kraftstoffmenge können auch andere Größen, die die Kraftstoffmenge charakterisieren, verwendet werden. Insbesondere können Momentengrößen, Kraftstoffvolumen und/oder die Ansteuerdauer entsprechender Stellglieder verwendet werden.

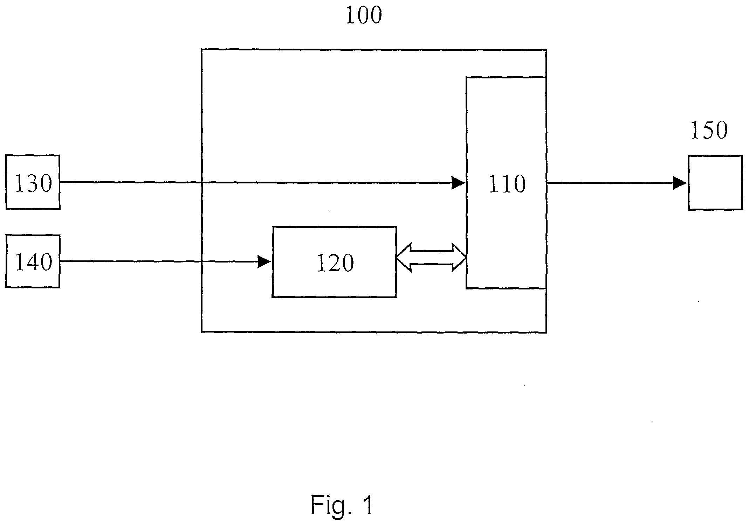

In Figur 1 sind die wesentlichen Elemente einer Vorrichtung zur Steuerung einer Brennkraftmaschine als Blockdiagramm dargestellt. Ein Steuergerät ist mit 100 bezeichnet. Dieses umfaßt unter anderem eine Stellgrößenvorgabe 110 und ein Modell 120. Dem Steuergerät 100 werden die Ausgangssignale erster Sensoren 130 und zweiter Sensoren 140 zugeführt. Die ersten Sensoren beaufschlagen im wesentlichen die Stellgrößenvorgabe 110 und die zweiten Sensoren im wesentlichen das Modell 120 mit Signalen. Die Darstellung ist dabei lediglich beispielhaft, da verschiedene Sensoren sowohl die Stellgrößenvorgabe 110 als auch das Modell 120 mit Signalen beaufschlagen können.

Die Stellgrößenvorgabe beaufschlagt wenigstens ein Stellelement 150 mit Ansteuersignalen. Das wenigstens eine Stellelement 150 bestimmt die einzuspritzende Kraftstoffmenge, den Zeitpunkt und/oder das Ende der Kraftstoffzumessung. Des weiteren können weitere Stellelemente vorgesehen sein, die beispielsweise die Abgasrückführrate bzw. andere Betriebskenngrößen beeinflussen können.

Das Modell 120 tauscht mit der Stellgrößenvorgabe 110 verschiedene Signale aus. Ausgehend von den Sensorsignalen, die verschiedene Betriebskenngrößen charakterisieren, berechnet die Stellgrößenvorgabe 110 eine einzuspritzende Kraftstoffmenge QK. Des weiteren gibt die Stellgrößenvorgabe 110 eine höchstzulässige Kraftstoffmenge QKM, abhängig von den Betriebskenngrößen, vor. Die einzuspritzende Kraftstoffmenge QK wird dann auf diese höchstzulässige Kraftstoffmenge begrenzt. Ausgehend von dieser begrenzten Kraftstoffmenge werden dann die Ansteuersignale zur Beaufschlagung des Stellelements 150 bzw. der Stellelemente 150 vorgegeben.

Verschiedene Größen werden von dem Modell 120 ausgehend von Betriebskenngrößen oder intern in der Stellgrößenvorgabe 110 vorliegenden Signalen mittels eines oder mehreren Modellen berechnet. Ein solches Modell ist beispielsweise aus der DE 100 17 280 bekannt. Die berechneten Größen werden von der Stellgrößenvorgabe 110 bei der Vorgabe der Ansteuersignale, der einzuspritzenden Kraftstoffmenge und/oder der höchstzulässigen Kraftstoffmenge berücksichtigt.

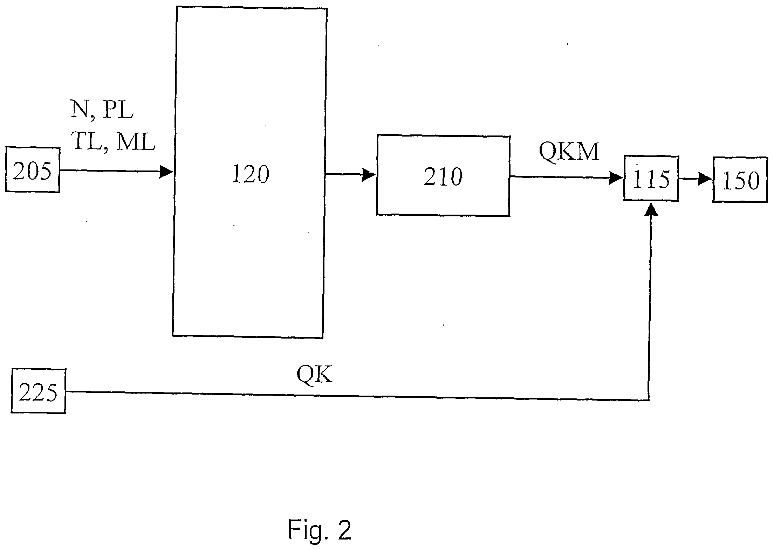

In Figur 2 ist eine erste Ausführungsform der erfindungsgemäßen Vorgehensweise dargestellt. Bereits in Figur 1 beschriebene Elemente sind mit entsprechenden Bezugszeichen bezeichnet. Eine erste Signalvorgabe 205 beaufschlagt das Modell des Luftsystems 120 mit diversen Signalen wie beispielsweise einem Signal N, das die Drehzahl der Brennkraftmaschine charakterisiert, einem Signal PL und einem Signal TL, das den Ladedruck bzw. die Ladelufttemperatur charakterisiert und einem Signal ML, das die Luftmenge charakterisiert, die der Brennkraftmaschine zugeführt wird. Diese Signale, insbesondere das Signal ML, das die Luftmenge charakterisiert, werden von Sensoren bereitgestellt. Alternativ können diese Größen auch intern im Steuergerät 100 vorliegen und zur Steuerung anderer Betriebsgrößen verwendet werden.

Das Modell des Luftsystems beaufschlagt eine Rauchbegrenzung 210 mit einem Signal, das den Frischluftmassenstrom in den Motor charakterisiert. Die Rauchbegrenzung 210 gibt ein Signal QKM vor, das der höchstzulässigen Kraftstoffmenge entspricht. Mit diesem Signal wird eine Minimalauswahl 115 beaufschlagt, an dessen zweitem Ausgang das Ausgangssignal einer zweiten Signalvorgabe 225 anliegt. Bei diesem Ausgangssignal QK handelt es sich um ein Signal, das die einzuspritzende Kraftstoffmenge charakterisiert. Mit dem Ausgangssignal der Minimalauswahl 115 wird dann das Mengenstellwerk 150 beaufschlagt.

Ausgehend von verschiedenen Eingangsgrößen, die beispielsweise die Drehzahl N, die Ladelufttemperatur TL, den Ladeluftdruck PL und/oder die der Brennkraftmaschine zugeführte Luftmenge ML charakterisieren, berechnet das Modell 120 eine Größe, die den Frischluftmassenstrom in die Brennkraftmaschine und die Sauerstoffmasse, die der Brennkraftmaschine zugeführt wird charakterisiert. Ausgehend von dieser Größe bestimmt dann die Rauchbegrenzung 210 die höchstzulässige Kraftstoffmenge QKM, die möglich ist, ohne dass unzulässige Rauchemissionen auftreten. Die Minimalauswahl 115 begrenzt die einzuspritzende Kraftstoffmenge QK, die von der zweiten Signalvorgabe bereitgestellt wird, auf diesen höchstzulässigen Wert und beaufschlagt mit diesem begrenzten Wert den Mengensteller 150.

Bei der zweiten Signalvorgabe handelt es sich bevorzugt um ein Teil der Stellgrößenvorgabe 110 des Steuergeräts. In der Regel sind auch die Rauchbegrenzung 210 und die Minimalauswahl 115 in die Stellgrößenvorgabe 110 integriert.

Erfindungsgemäß bildet das physikalische Modell 120 des Luftsystems die Speichereffekte im Ansaugvolumen zwischen dem Sensor, der das Signal bezüglich der Frischluftmenge ML ermittelt und dem Motoreinlaß nach. Durch diese Berechnung ist eine genaue Berechnung des Frischluftmassenstroms auch in dynamischen Zuständen, beispielsweise bei Änderungen des Ladedrucks, möglich. Dieses dynamisch korrigierte Signal des Luftmassenmessers wird in der Rauchbegrenzung 210 zur Ermittlung der maximal zulässigen Kraftstoffmasse verwendet.

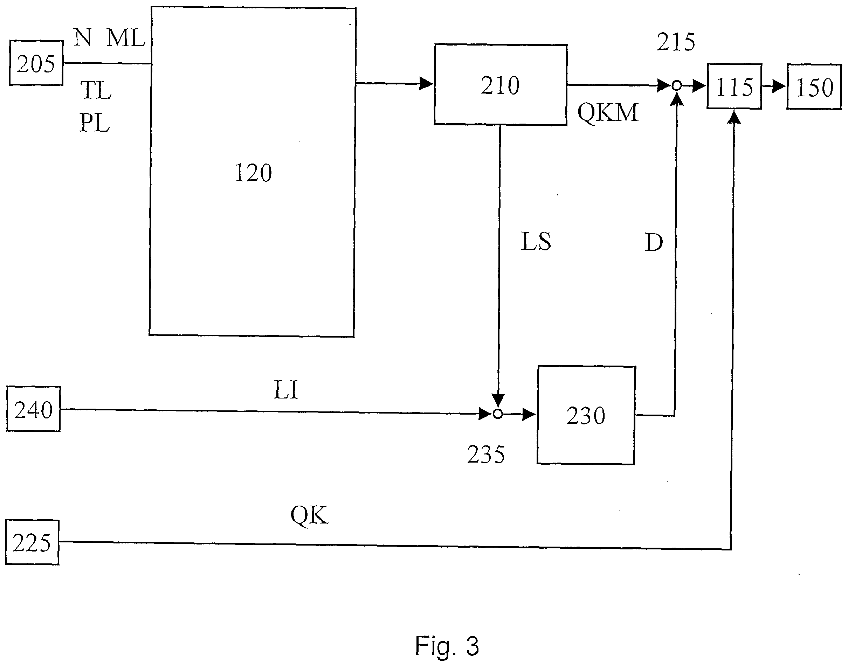

In Figur 3 ist eine weitere Ausführungsform der erfindungsgemäßen Vorgehensweise dargestellt. Bereits in Figur 1 oder 2 beschriebene Elemente sind mit entsprechenden Bezugszeichen bezeichnet. Der wesentliche Unterschied zur Ausführungsform gemäß Figur 2 liegt darin, dass ein Regler 230 vorgesehen ist, der einen Verknüpfungspunkt 215 mit einem Ausgangssignal D beaufschlagt. Am zweiten Eingang des Verknüpfungspunktes 215 liegt das Ausgangssignal QKM der Rauchbegrenzung 210. Dem Regler 230 wird das Ausgangssignal eines Verknüpfungspunktes 235 zugeführt, der ein Signal LS der Rauchbegrenzung 210 und ein Signal LI eines Lambda-Sensors 240 verarbeitet.

Erfindungsgemäß ist vorgesehen, dass gegenüber der Ausführungsform gemäß Figur 2 zusätzlich der Regler 230 das Ausgangssignal eines Lambda-Sensors, der ein Signal LI bereitstellt, das die Sauerstoffkonzentration im Abgas charakterisiert, mit einem entsprechenden Sollwert LS vergleicht und ausgehend von diesem Vergleichsergebnis einen Wert D zur Korrektur des höchstzulässigen Kraftstoffmengenwerts QKM vorgibt.

Dabei gibt die Rauchbegrenzung 210 neben dem höchstzulässigen Kraftstoffmengenwert QKM einen Sollwert LS für die Sauerstoffkonzentration im Abgas vor, auf den der Regler 230 die gemessene Lambda-Konzentration LI dadurch einregelt, dass sie das Ausgangssignal QKM der Rauchbegrenzung mit dem Wert D korrigiert.

Dies bedeutet, der Regler 230 vergleicht den tatsächlichen Lambda-Wert im Abgas mit dem in der Rauchbegrenzung festgelegten Wert. Durch Teleranzen im Einspritzsystem oder bei der Erfassung der Luftmenge kommt es zu Abweichungen zwischen dem Soll- und Istwert für das Lambda-Signal. Durch einen geeigneten Eingriff über das Signal D in die maximal zulässige Einspritzmenge wird diese Abweichung ausgeregelt.

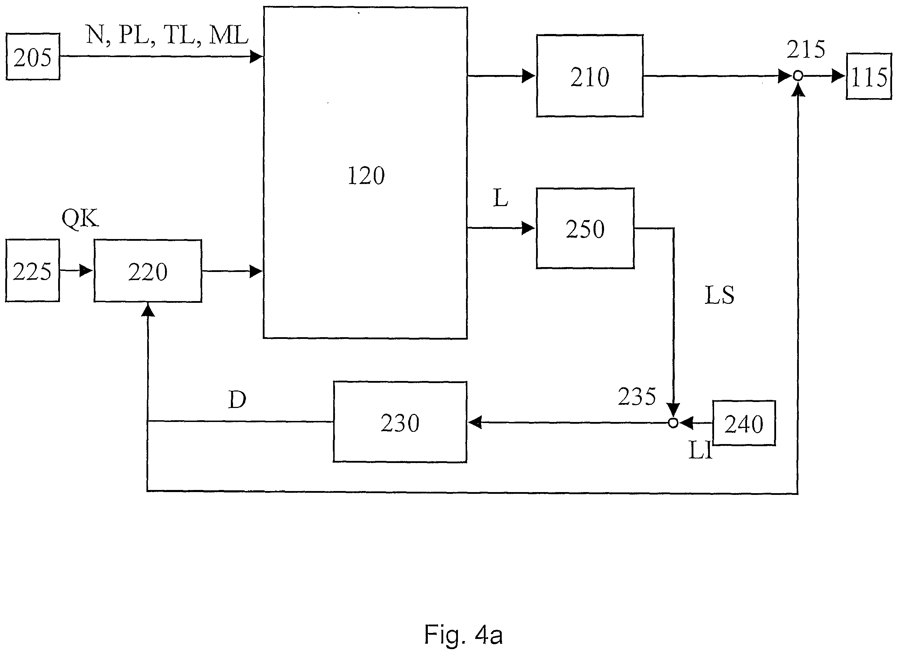

In Figur 4a ist eine weitere Ausgestaltung dargestellt. Neben den bereits in Figur 3 beschriebenen Elementen ist zusätzlich ein Sensormodell 250 und eine Korrektur 220 vorgesehen. Das Ausgangssignal der zweiten Signalvorgabe 225 gelangt über die Korrektur 220 zu dem Modell 120 des Luftsystems. Des weiteren beaufschlagt das Luftsystem 120 das Sensormodell 250 mit einem Signal L, das die berechnete und/oder simulierte Sauerstoffkonzentration im Abgas charakterisiert. Das Ausgangssignal LS des Sensormodells entspricht dem Sollwert LS, mit dem der Verknüpfungspunkt 235 beaufschlagt wird. Der Regler 230 beaufschlagt neben dem Verknüpfungspunkt 215 zusätzlich die Korrektur 220 mit dem Korrektursignal D.

Das Modell 120 des Luftsystems liefert neben dem Frischluftmassenstrom einen Schätzwert L, der den Sauerstoffgehalt im Abgas charakterisiert. Dieser Schätzwert berücksichtigt die Systemzeitkonstanten und ist daher auch bei dynamischen Vorgängen, d.h. beim Beschleunigen und Verzögern, gültig. Das Sensormodell 250 berücksichtigt das Übertragungsverhalten der Lambda-Sonde. Die Lambda-Sonde weist ein charakteristisches Übertragungsverhalten auf, das im Sensormodell berücksichtigt wird. Dies bedeutet, das Modell des Luftsystems liefert ein schnelles Lambda-Signal, das von einer optimalen Lambda-Sonde am Ort der Verbrennung ohne Verzögerungsverhalten bereitgestellt würde. Dieses Signal wird von dem Sensormodell an das Übertragungsverhalten der Lambda-Sonde angepaßt. Dieses so korrigierte geschätzte Lambda-Signal LS wird mit dem Meßwert der Lambda-Sonde LI verglichen und dem Regler 230 zugeführt. Die Abweichung der beiden Werte ist ein Maß für den aktuellen Einspritzmassenfehler.

Der Regler 230 verändert durch die Korrektur 220 die dem Modell zugeführte Einspritzmasse QK so lange, bis die Abweichung zwischen Lambda-Schätzung und Lambda-Messung zu Null wird. Die Vorgehensweise zur Ermittlung des Begrenzungswerts QKM mittels des Rauchkennfeldes und der Korrektur des Begrenzungswerts in dem Verknüpfungspunkt 215 entspricht den bisherigen beschriebenen Ausführungsformen.

Vorteilhaft bei dieser Vorgehensweise ist, dass der Regler zur Bestimmung des Einspritzmassenfehlers ständig im Eingriff ist und nicht nur bei Volllastbedingungen, wie dies bei der Ausführungsform gemäß Figur 3 der Fall ist. Dadurch entfallen aufwendige Maßnahmen zum Ein- und Ausschalten und Initialisieren des Reglers 230, die in Struktur 2 notwendig sind.

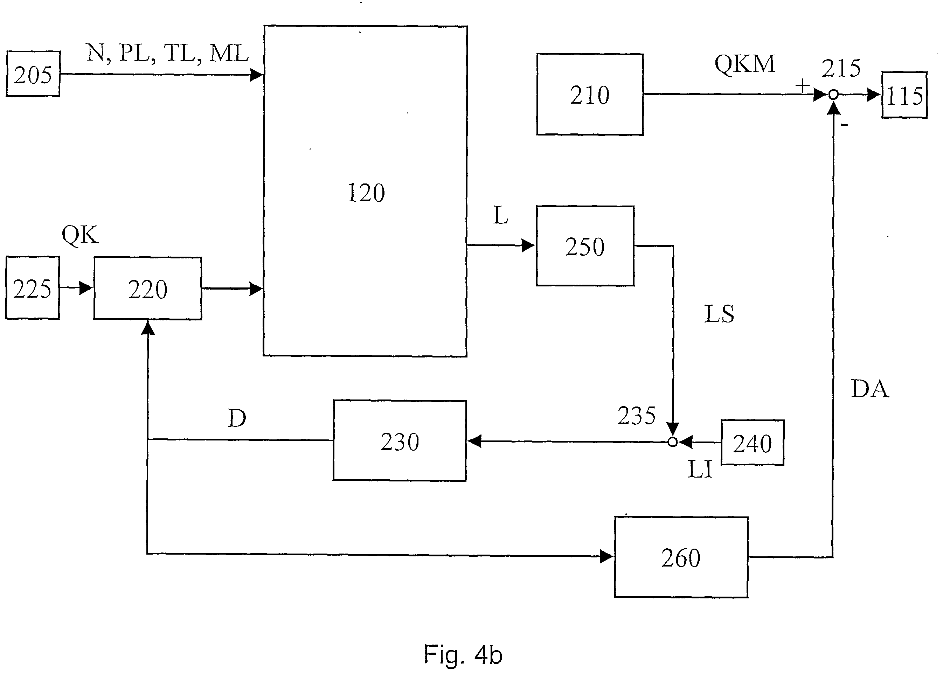

In Figur 4b ist eine weitere Ausführungsform mit einer Adaption dargestellt. Das Ausgangssignal D des Reglers 230 gelangt im Gegensatz zur Ausführungsform der Figur 4a zur Adaption 260. Das Ausgangsignal DA der Adaption 260 gelangt dann zu dem Verknüpfungspunkt 215. Ferner kann bei einer Ausgestaltung vorgesehen sein, dass die Rauchbegrenzung 210 zur Bestimmung der höchstzulässigen Kraftstoffmenge QKM kein Ausgangssignal des Modells 120 verwendet. Vorzugsweise wird die höchstzulässige Kraftstoffmenge lediglich abhängig von der Drehzahl der Brennkraftmaschine vorgegeben.

Bei einer einfachen Ausführungsform ist die Adaption 260 als PTl-Filter ausgebildet. Das heißt im wesentlichen, dass die Adaption 260 die ermittelten Korrekturwerte D abspeichert und eine Mittelwertbildung über die Zeit durchführt. Kurzfristige Änderungen des Korrekturwerts D wirken sich nicht auf den Korrekturwert DA aus. Ferner wird der bisherige Wert DA verwendet, wenn zeitweise kein neuer Wert D berechnet wird und/oder berechnet werden kann. Dies ist beispielsweise beim Start der Fall, wenn die Lambdasonde noch nicht betriebsbereit ist. Ferner ist vorzugsweise vorgesehen, dass der Korrekturwert DA auf solche Werte begrenzt, dass dieser nur eine Verringerung der höchszulässigen Kraftstoffmenge QKM bewirken kann.

Befindet sich die Brennkraftmaschine in einem Betriebspunkt unterhalb der höchstzulässigen Kraftstoffmenge, so ist der Störgrößenbeobachter aktiv. Dies bedeutet, der Regler 230 vergleicht den gemessenen Istwert LI mit dem Sollwert LS für das Lambdasignal und berechnet ausgehend von dem Vergleichsergebnis den Korrekturwert D mit dem in der Korrektur 220 die dem Modell 120 zugeführte Kraftstoffmenge korrigiert wird. Dies bedeutet der Korrekturwert und damit die Kraftstoffmenge QKK, die dem Modell 120 zugeführt wird, wird eingeregelt, bis der gemessene Lambdawert LI dem berechneten Lambdawert LS entspricht. Dies bedeutet, die Größe QK, die insbesondere von dem Modell 120 verwendet wird, entspricht ohne Abweichung der tatsächlich eingespritzten Kraftstoffmenge.

Betriebspunkte mit aktiver Begrenzung liegen vor, wenn die gewünschte Kraftstoffmenge QK größer als die höchstzulässige Kraftstoffmenge QKM ist und/oder wenn die gewünschte Kraftstoffmenge QK nur geringfügig kleiner ist als die höchstzulässige Kraftstoffmenge QKM. Befindet sich die Brennkraftmaschine in einem solchen Betriebspunkt mit aktiver Begrenzung, so wird der Korrekturwert DA gelernt. Mit diesem adaptierten Wert DA wird die höchstzulässige Menge QKM korrigiert. Dabei wird der von der Adaption 260 gefilterte Wert DA von der Begrenzungsmenge QKM abgezogen. Diese so korrigierte Begrenzungsmenge wirkt auf die Einspritzung und verändert damit den Sauerstoffgehalt im Abgas. Der Regler 230 regelt, entsprechend wie oben, bis das gemessene dem berechneten Lambdawert entspricht.

Die Adaption 260 bietet den Vorteil, dass die adaptierten Werte auch bei einem Ausfall des Modells 120, beispielsweise durch Ausfall eines Sensors, zur Verfügung stehen. Ferner ist mittels der Adaption 260 auch in Betriebszuständen, in denen kein Lambdasignal zur Verfügung steht, zumindest eine genaue Steuerung möglich. Dies ist beispielsweise beim Start der Fall, wenn die Lambdasonde noch nicht betriebsbereit ist. Bei diesem Ausführungsbeispiel bestimmt das Modell 120 über die Adaption und deren Korrekturwert DA die höchstzulässige Kraftstoffmenge. Dies bedeutet auch bei dieser Ausführungsform ist der Begrenzungswert ausgehend von einem Ausgangssignal des Modells des Luftsystems vorgebbar.

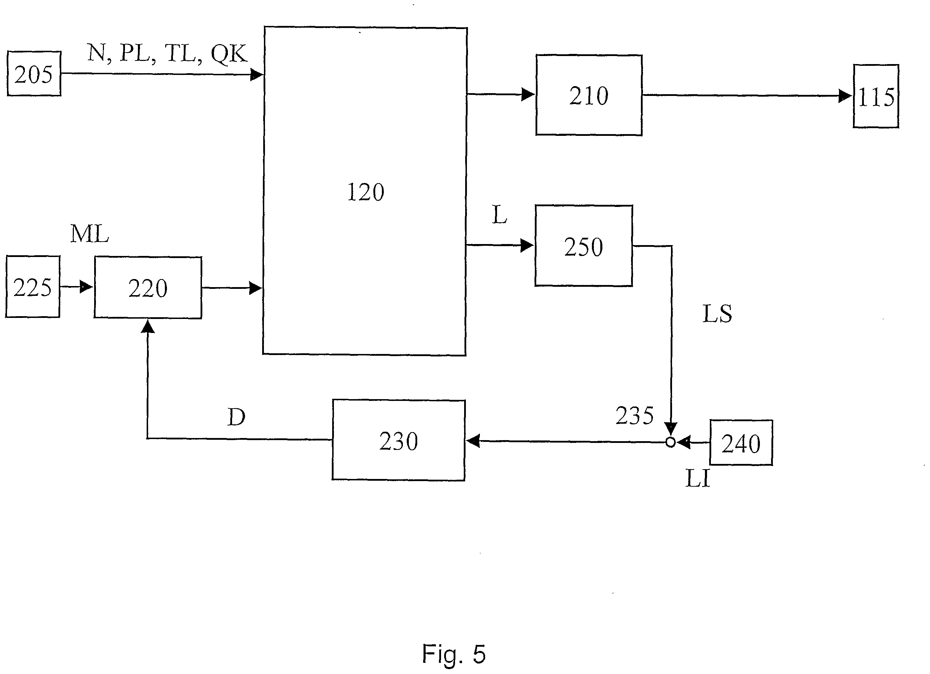

In Figur 5 ist eine weitere Ausgestaltung dargestellt. Im Unterschied zur Ausführungsform der Figur 4 ist vorgesehen, dass nicht die einzuspritzende Kraftstoffmenge QK sondern die Frischluftmenge ML mittels des Ausgangssignal des Reglers 230 korrigiert wird. Ferner wurde die Korrektur der höchstzulässigen Kraftstoffmenge QKM im Verknüpfungspunkt 215 eingespart.

Das vom Sensormodell 250 korrigierte geschätzte Lambda-Signal LS wird mit dem Meßwert der Lambda-Sonde LI verglichen und dem Regler 230 zugeführt. Die Abweichung der beiden Werte ist ein Maß für den aktuellen Luftmassenfehler.

Der Regler 230 verändert durch die Korrektur 220 die dem Modell zugeführte Luftmasse ML so lange, bis die Abweichung zwischen Lambda-Schätzung und Lambda-Messung zu Null wird.

## Patentansprüche

1. Verfahren zur Steuerung einer Brennkraftmaschine, insbesondere einer selbstzündenden Brennkraftmaschine, wobei ausgehend von Betriebskenngrößen ein Begrenzungswert vorgegeben wird, auf den eine Größe, welche die einzuspritzende Kraftstoffmenge charakterisiert, begrenzt wird, **dadurch gekennzeichnet, dass** der Begrenzungswert ausgehend von einem Ausgangssignal eines physikalischen Modells eines Luftsystems vorgegeben wird, das als Eingangsgröße wenigstens eine Größe verarbeitet, die die Luftmenge charakterisiert, die der Brennkraftmaschine zugeführt wird, und das Speichereffekte im Ansaugvolumen nachbildet.

2. Verfahren nach Anspruch 1, **dadurch gekennzeichnet, dass** das physikalische Modell des Luftsystems als Eingangsgröße ferner eine Größe verarbeitet, die die einzuspritzende Kraftstoffmenge charakterisiert, die der Brennkraftmaschine zugeführt wird.

3. Verfahren nach einem der vorherigen Ansprüche, **dadurch gekennzeichnet, dass** das Ausgangssignal eines Luftmengenmessers und/oder eines Ladedrucksensors als Größe verwendet werden, die die Luftmenge charakterisieren.

4. Verfahren nach einem der vorherigen Ansprüche, **dadurch gekennzeichnet, dass** das physikalische Modell eine Größe bestimmt, die den Frischluftmassenstrom in die Brennkraftmaschine charakterisiert.

5. Verfahren nach einem der vorherigen Ansprüche, **dadurch gekennzeichnet, dass** ein Sollwert für eine Sauerstoffgröße, die den Sauerstoffgehalt im Abgas charakterisiert, vorgegeben wird.

6. Verfahren nach einem der vorherigen Ansprüche, **dadurch gekennzeichnet, dass** ausgehend von dem Vergleich des Sollwerts für die Sauerstoffgröße und einem Istwert für die Sauerstoffgröße ein Korrekturwert für den Begrenzungswert und/oder die einzuspritzende Kraftstoffmenge und/oder für die Luftmenge vorgegeben wird.

7. Vorrichtung zur Steuerung einer Brennkraftmaschine, insbesondere einer selbstzündenden Brennkraftmaschine, bei dem ausgehend von Betriebskenngrößen eine Begrenzungswert vorgegeben wird, auf den eine Größe, welche die einzuspritzende Kraftstoffmenge charakterisiert, begrenzt wird, **dadurch gekennzeichnet, dass** Mittel vorgesehen sind, die den Begrenzungswert ausgehend von einem Ausgangssignal eines physikalischen Modells eines Luftsystems vorgeben, das als Eingangsgröße wenigstens eine Größe verarbeitet, die die Luftmenge charakterisiert, die der Brennkraftmaschine zugeführt wird und das Speichereffekte im Ansaugvolumen nachbildet.

8. Computerprogramm mit Programmcode-Mitteln, um alle Schritte von jedem beliebigen der Ansprüche 1 bis 6 durchzuführen, wenn das Programm auf einem Computer, insbesondere einem Steuergerät für eine Brennkraftmaschine, ausgeführt wird.

9. Computerprogrammprodukt mit Programmcode-Mitteln, die auf einem computerlesbaren Datenträger gespeichert sind, um das Verfahren nach jedem beliebigen der Ansprüche 1 bis 6 durchzuführen, wenn das Programmprodukt auf einem Computer, insbesondere einem Steuergerät für eine Brennkraftmaschine, ausgeführt wird.

10. Digitales Speichermedium, insbesondere Diskette, mit elektronisch auslesbaren Steuersignalen, die so mit einem programmierbaren Computersystem zusammenwirken können, daß ein Verfahren nach einem der Ansprüche 1 bis 6 ausgeführt wird.

## Claims

1. Method for controlling an internal combustion engine, in particular a self-igniting internal combustion engine, a limiting value to which a variable which characterizes the quantity of fuel to be injected is limited being predefined on the basis of operating characteristic values, **characterized in that** the limiting value is predefined on the basis of an output signal from a physical model of an air system which, as input variable, processes at least one variable which characterizes the quantity of air that is supplied to the internal combustion engine and which simulates storage effects in the intake volume.

2. Method according to Claim 1, **characterized in that** the physical model of the air system also processes as input variable a variable which characterizes the quantity of fuel to be injected that is supplied to the internal combustion engine.

3. Method according to one of the preceding claims, **characterized in that** the output signal from an air quantity meter and/or a charging pressure sensor is used as a variable which characterizes the quantity of air.

4. Method according to one of the preceding claims, **characterized in that** the physical model determines a variable which characterizes the fresh air mass flow into the internal combustion engine.

5. Method according to one of the preceding claims, **characterized in that** a set point for an oxygen variable which characterizes the oxygen content in the exhaust is predefined.

6. Method according to one of the preceding claims, **characterized in that**, starting from the comparison of the set point for the oxygen variable and an actual value for the oxygen variable, a correction value for the limiting value and/or the quantity of fuel to be injected and/or for the quantity of air is predefined.

7. Device for controlling an internal combustion engine, in particular a self-igniting internal combustion engine, in which a limiting value to which a variable which characterizes the quantity of fuel to be injected is limited is predefined on the basis of operating characteristic values, **characterized in that** means are provided which predefine the limiting value on the basis of an output signal from a physical model of an air system which, as input variable, processes at least one variable which characterizes the quantity of air that is supplied to the internal combustion engine and which simulates storage effects in the intake volume.

8. Computer program having program code means in order to carry out all the steps of any one of Claims 1 to 6 when the program is executed on a computer, in particular a control device for an internal combustion engine.

9. Computer program product having program code means which are stored on a computer-readable data carrier in order to carry out the method according to any one of Claims 1 to 6 when the program product is executed on a computer, in particular a control device for an internal combustion engine.

10. Digital storage medium, in particular floppy disk, with electronically readable control signals which can interact with a programmable computer system such that a method according to one of Claims 1 to 6 is carried out.

## Revendications

1. Procédé de commande d'un moteur à combustion interne, notamment d'un moteur à combustion interne à auto-allumage, une valeur de limitation étant prédéfinie à partir de grandeurs caractéristiques de fonctionnement, à laquelle est limitée une grandeur qui caractérise la quantité de carburant à injecter, **caractérisé en ce que** la valeur de limitation est prédéfinie à partir d'un signal de sortie d'un modèle physique d'un système d'air, qui traite en tant que grandeur d'entrée au moins une grandeur qui caractérise le volume d'air acheminé au moteur à combustion interne, et simule des effets d'accumulation dans le volume d'aspiration.

2. Procédé selon la revendication 1, **caractérisé en ce que** le modèle physique du système d'air traite en outre en tant que grandeur d'entrée une grandeur qui caractérise la quantité de carburant à injecter qui est acheminée au moteur à combustion interne.

3. Procédé selon l'une des revendications précédentes, **caractérisé en ce que** le signal de sortie d'un dispositif de mesure de volume d'air et/ou d'un capteur de pression de suralimentation est utilisé en tant que grandeur qui caractérise le volume d'air.

4. Procédé selon l'une des revendications précédentes, **caractérisé en ce que** le modèle physique détermine une grandeur qui caractérise le débit massique d'air frais dans le moteur à combustion interne.

5. Procédé selon l'une des revendications précédentes, **caractérisé en ce qu'**une valeur de consigne est prédéfinie pour une grandeur d'oxygène qui caractérise la teneur en oxygène dans les gaz d'échappement.

6. Procédé selon l'une des revendications précédentes, **caractérisé en ce qu'**une valeur de correction pour la valeur de limitation et/ou la quantité de carburant à injecter et/ou pour le volume d'air est prédéfinie en partant de la comparaison de la valeur de consigne pour la grandeur d'oxygène et d'une valeur réelle pour la grandeur d'oxygène.

7. Dispositif de commande d'un moteur à combustion interne, notamment d'un moteur à combustion interne à auto-allumage, avec lequel une valeur de limitation est prédéfinie à partir de grandeurs caractéristiques de fonctionnement, à laquelle est limitée une grandeur qui caractérise la quantité de carburant à injecter, **caractérisé en ce que** des moyens sont présents, lesquels prédéfinissent la valeur de limitation à partir d'un signal de sortie d'un modèle physique d'un système d'air, qui traite en tant que grandeur d'entrée au moins une grandeur qui caractérise le volume d'air acheminé au moteur à combustion interne, et simule des effets d'accumulation dans le volume d'aspiration.

8. Programme informatique comprenant des moyens de code de programme pour mettre en oeuvre toutes les étapes de chacune quelconque des revendications 1 à 6 lorsque le programme est exécuté sur un ordinateur, notamment un contrôleur pour un moteur à combustion interne.

9. Produit de programme informatique comprenant des moyens de code de programme, qui sont enregistrés sur un support de données lisible par ordinateur, pour mettre en oeuvre le procédé selon chacune quelconque des revendications 1 à 6 lorsque le produit de programme est exécuté sur un ordinateur, notamment un contrôleur pour un moteur à combustion interne.

10. Support d'enregistrement numérique, notamment disquette, comprenant des signaux de commandes lisibles électroniquement qui peuvent interagir avec un système informatique programmable de telle sorte qu'un procédé selon l'une des revendications 1 à 6 est mis en oeuvre.
